# FASCICULE DE BREVET EUROPEEN

(11) **EP 3 145 257 B1**
(45) Date de publication et mention de la délivrance du brevet: **01.08.2018**
(21) Numéro de dépôt: 16174707.6
(22) Date de dépôt: 16.06.2016
(51) Int. Cl.: H04W 64/00, G01S 5/00, G01S 5/02

(54) **PROCEDE ET DISPOSITIF DE DETERMINATION DE LA POSITION GEOGRAPHIQUE D'UN EQUIPEMENT**
VERFAHREN UND APPARAT ZUR ERMITLLUNG DER GEOGRAPHISCHEN POSITION EINER VORRICHTUNG
METHOD AND DEVICE FOR DETERMINING THE GEOGRAPHIC POSITION OF AN EQUIPMENT

(30) Priorité: 17.09.2015 FR 1558720
(43) Date de publication de la demande: 22.03.2017
(73) Titulaire: Schneider Electric Industries SAS, 92500 Rueil-Malmaison (FR)
(72) Inventeur: GASSION, Romain, 38050 Grenoble (FR); GOUTAY, Roland, 38050 Grenoble (FR)
(74) Mandataire: Tripodi, Paul

(56) Documents cités:
- US-A1- 2014 128 099
- US-B1- 9 084 013

## Description

### Domaine technique de l'invention

La présente invention se rapporte à un procédé de détermination de la position géographique d'au moins un équipement à l'aide d'un dispositif attaché audit équipement.

### Etat de la technique

Certains équipements, comme des équipements électriques, sont vendus via des canaux de distribution qui ne permettent pas à leur fabricant de connaître chez quel client ils vont être installés et donc quelle est leur destination finale. Or la connaissance de la destination finale d'un équipement est cruciale pour un fabriquant qui souhaite suivre l'évolution de son équipement et proposer des services, par exemple de maintenance, associés à cet équipement et procéder à des rappels de parc. Comme les équipements sont souvent transportés et installés dans un espace intérieur clos, un dispositif de positionnement par GPS ne peut être employé. Les publications US2014/0128099 A1 et US9084013 B1 divulguent des procédés de détermination de localisation sans GPS. Le but de l'invention est de proposer une solution fiable et simple qui permette de connaître la destination finale d'un équipement.

### Exposé de l'invention

Ce but est atteint par un procédé de détermination de la position géographique d'au moins un équipement à l'aide d'un dispositif solidaire en mouvement dudit équipement, comme spécifié dans la revendication 1. jusqu'à une nouvelle position fixe et à l'issue d'une deuxième durée déterminée, identique ou différente à la première durée,
- une étape de détermination de la position géographique de l'équipement par une unité de traitement à partir des données réseaux reçus après une deuxième étape d'émission.

Selon une particularité, le procédé comporte une étape de mémorisation des données réseaux dans une mémoire du dispositif si ledit deuxième réseau de communication n'est pas disponible.

Selon une autre particularité, le procédé comporte :
- une étape de détermination, par le dispositif, desdites données réseaux lorsque le dispositif est restée fixe pendant une durée déterminée, supérieure à ladite première durée et à ladite deuxième durée,
- une étape d'émission par ledit dispositif desdites données réseaux à destination de l'unité de traitement de données à travers un réseau de communication, dit troisième réseau de communication, identique ou distinct du deuxième réseau de communication, si celui-ci est disponible.

Selon une autre particularité, le procédé comporte une étape de mémorisation des données réseaux dans une mémoire du dispositif si ledit troisième réseau de communication n'est pas disponible.

L'invention concerne également le dispositif employé pour aider à la géolocalisation d'un équipement, comme spécifié dans la revendication 5. Selon une particularité, les bornes des premiers réseaux de communication auprès desquelles sont recueillies les données réseaux sont des points d'accès WIFI ou bluetooth.

Selon une autre particularité, ledit deuxième réseau de communication est de type LPWAN (« Low Power Wide Area Network »).

### Brève description des figures

D'autres caractéristiques et avantages vont apparaître dans la description détaillée qui suit faite en regard des dessins annexés dans lesquels :

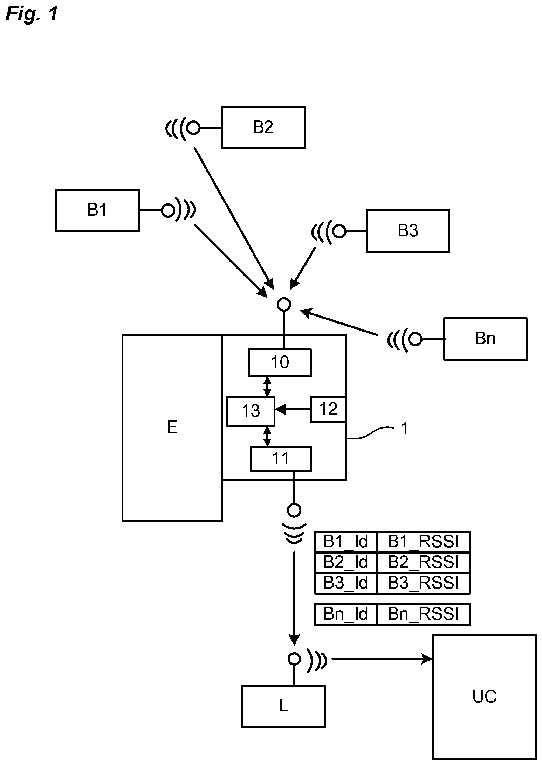

- la figure 1 illustre le principe de fonctionnement de l'invention.

### Description détaillée d'au moins un mode de réalisation

L'invention consiste à déterminer la destination finale d'un équipement E, tel que par exemple un équipement électrique qui sera souvent destiné à être installé dans un espace intérieur clos.

Cette invention est mise en oeuvre à l'aide d'un dispositif 1 attaché à l'équipement E dont on souhaite connaître la destination finale. Préférentiellement, le dispositif 1 est fixé directement sur l'équipement E, sur un support sur lequel est placé l'équipement ou sur une enveloppe dans laquelle est emballé l'équipement.

Dans la suite de la description, on distingue des premiers réseaux de communication présentant une ou plusieurs bornes, désignées B1 à Bn, placées dans l'environnement du dispositif 1 et permettant de déterminer la position géographique du dispositif et un deuxième réseau de communication comportant une ou plusieurs bornes, désignées L, à portée du dispositif et employées pour émettre des données à destination d'une unité de traitement UC distante, chargée de déterminer la position géographique du dispositif.

En référence à la figure 1, le dispositif 1 comporte un boîtier dans lequel est positionné :
- un microcontrôleur 13 comportant au moins un microprocesseur pour réaliser le traitement des données et une mémoire pour stocker des données,
- un circuit 10 de détection et de réception des signaux émis par les bornes B1-Bn des premiers réseaux de communication, placées dans son environnement. Il s'agira par exemple des bornes ou points d'accès WIFI, Bluetooth ou tout autre type de balise (« beacon » en anglais) ou mélange de ces technologies. un détecteur de mouvement 12, par exemple de type accéléromètre, connecté sur une entrée du microcontrôleur 13 et agencé pour détecter si le dispositif est en mouvement ou en position fixe,
- une horloge, par exemple de type logiciel présente dans le microcontrôleur 13 et gérée par le microprocesseur,
- un circuit 11 de détection de la présence d'une borne L d'un deuxième réseau de communication et d'émission de données sur ce réseau selon son protocole de communication. Ce deuxième réseau de communication est par exemple de type longue distance et bas-débit de type LPWAN (pour « Low Power Wide Area Network ») et se base sur un protocole tel que LoRaWAN (« pour Long Range Wide-area network ») ou celui développé par la société Sigfox.

Selon l'invention, à l'aide de ces différents composants, le dispositif 1 fonctionne de la manière suivante :
- Lorsque le microcontrôleur 13 détecte que le dispositif est dans une position fixe, c'est-à-dire qu'il ne reçoit plus de signal du détecteur de mouvement 12, et que celui-ci ne s'est pas déplacé depuis une durée déterminée (par exemple fixée à 15 minutes) mesurée grâce à son horloge, il lance le circuit 10 de détection afin de recueillir les données réseaux suivantes :
   - l'identifiant (B1_Id à Bn_Id) de chaque borne B1-Bn des premiers réseaux de communication, présente dans son environnement (appelé communément BSSID qui correspond à l'adresse MAC du point d'accès WIFI),

   - la puissance en réception (B1_RSSI-Bn_RSSI) des signaux émis par chaque borne B1-Bn à sa destination. De manière connue, la mesure de la puissance en réception, appelée RSSI (pour « Received Signal Strength Indication ») peut notamment être employée au sein d'un réseau WIFI pour géolocaliser un dispositif en intérieur.
- Une fois ces données recueillies pour cette position, le microcontrôleur 13 les mémorise dans sa mémoire.
- Par l'intermédiaire du circuit 11 de détection et d'émission, le microcontrôleur 13 effectue une vérification de la présence d'une borne L d'un deuxième réseau de communication tel que décrit ci-dessus, sur lequel les données réseaux recueillies peuvent être émises :
   - Si une telle borne L est à sa portée, le microcontrôleur 13 commande le circuit 11 de détection et d'émission pour l'émission des données sur ce réseau,
   - Si une telle borne L n'est pas à sa portée, le microcontrôleur 13 conserve les données en mémoire et tentera une nouvelle émission ultérieurement, lorsqu'un réseau de communication du type du deuxième réseau de communication sera disponible.
- Le microcontrôleur 13 met en oeuvre ces étapes tant qu'il reçoit régulièrement un signal de mouvement du détecteur de mouvement 12. Après chaque position fixe, le microcontrôleur 13 attend donc une durée déterminée avant de recueillir les données réseaux et de les envoyer à travers le réseau de communication. La durée d'attente après une position fixe peut être toujours identique ou adaptée selon différents critères, par exemple liés à la fréquence de déplacement du dispositif d'une position à une autre.

Ainsi grâce à cette procédure, il est possible de déterminer la position finale de l'équipement E, même si celui-ci est positionné dans un espace intérieur clos. Pour cela, l'unité de traitement UC détermine la position géographique du dispositif en cherchant les données régulièrement reçues en provenance du dispositif dans une ou plusieurs bases de données recensant les bornes B1-Bn installées et leur position. En fonction de l'atténuation des signaux par rapport à chacune des bornes B1-Bn, l'unité de traitement est capable de déterminer une position du dispositif 1, et donc de l'équipement E.

Selon l'invention, lorsque le microcontrôleur 13 n'a reçu aucun signal de mouvement du détecteur de mouvement 12 pendant une durée déterminée, supérieure à la durée décrite ci-dessus et par exemple égale à 24h, il lance son circuit 10 de détection et de réception afin de recueillir les données réseaux définies ci-dessus. Le microcontrôleur 13 lance ensuite le circuit 11 afin de savoir si une borne L d'un réseau de communication, du type du deuxième réseau de communication, est à portée du dispositif 1. Si un tel réseau est disponible, le microcontrôleur 13 commande le circuit 11 pour l'émission des dernières données réseaux recueillies. Si un tel réseau n'est pas disponible, le microcontrôleur 13 stocke les données dans sa mémoire, en attente de la détection d'un tel réseau. Cette procédure est mise en oeuvre par le microcontrôleur 13 de manière périodique afin de détecter toute nouvelle borne B1-Bn permettant de déterminer la position géographique du dispositif ou de la préciser et/ou toute nouvelle borne L permettant l'envoi des données réseaux vers l'unité de traitement UC distante.

La solution de l'invention présente ainsi de nombreux avantages, que les solutions actuelles ne peuvent obtenir. Elle permet de déterminer la position géographique d'un équipement, même si celui-ci est localisé dans un espace intérieur clos. De plus, elle est optimisée pour limiter la consommation d'énergie du dispositif et assurer ainsi, dans tous les cas de figure, la détermination de la position finale de l'équipement.

## Revendications

1. Procédé de détermination de la position géographique d'au moins un équipement (E) à l'aide d'un dispositif (1) solidaire en mouvement dudit équipement et comportant un détecteur de mouvement pour détecter si ledit dispositif (1) est en mouvement ou en position fixe, le procédé comportant :
- a) une première étape de détermination, par le dispositif (1), lorsque celui-ci est fixe et n'a pas été soumis à un déplacement depuis une première durée déterminée, de données réseaux comprenant les identifiants (B1_Id-Bn_Id) des bornes de réseaux de communication, dits premiers réseaux de communication, placés dans l'environnement du dispositif (1) et la puissance en réception (B1_RSSI-Bn_RSSI) des signaux émis par chaque borne,
- b) une deuxième étape d'émission par ledit dispositif (1) desdites données réseaux à destination d'une unité de traitement (UC) de données à travers un réseau de communication, dit deuxième réseau de communication, si ledit deuxième réseau de communication est disponible, et en ce que
- c) la première étape de détermination et la deuxième étape d'émission sont de nouveau mises en oeuvre après chaque déplacement du dispositif (1) jusqu'à une nouvelle position fixe et à l'issue d'une deuxième durée déterminée après avoir atteint cette nouvelle position fixe, ladite deuxième durée étant identique ou différente à la première durée, et en ce que le procédé comporte :
- d) une étape de détermination de la position géographique de l'équipement par une unité de traitement (UC) à partir des données réseaux reçus.

2. Procédé selon la revendication 1, le procédé comportant qu'au une étape de mémorisation des données réseaux dans une mémoire du dispositif si ledit deuxième réseau de communication n'est pas disponible.

3. Procédé selon la revendication 1 ou 2, le procédé comportant :
- une étape de détermination, par le dispositif, desdites données réseaux lorsque le dispositif est restée fixe pendant une durée déterminée, supérieure à ladite première durée et à ladite deuxième durée,
- une étape d'émission par ledit dispositif (1) desdites données réseaux à destination de l'unité de traitement (UC) de données à travers un réseau de communication, dit troisième réseau de communication, identique ou distinct du deuxième réseau de communication, si celui-ci est disponible.

4. Procédé selon la revendication 3, le procédé comportant une étape de mémorisation des données réseaux dans une mémoire du dispositif si ledit troisième réseau de communication n'est pas disponible.

5. Dispositif (1) employé pour aider à la géolocalisation d'un équipement (E), le dispositif comportant :
- un microcontrôleur (13) comportant au moins un microprocesseur pour réaliser le traitement des données et une mémoire pour stocker des données,
- un circuit (10) de détection et de réception des signaux émis par des bornes (B1-Bn) placées dans son environnement, agencé pour recueillir des données réseaux comportant les identifiants (B1_Id-Bn_Id) des bornes de réseaux de communication, dits premiers réseaux de communication, placés dans l'environnement du dispositif (1) et la puissance en réception (B1_RSSI-Bn_RSSI) des signaux émis par chaque borne,
- un détecteur de mouvement (12), connecté sur une entrée du microcontrôleur (13) et agencé pour détecter si le dispositif (1) est en mouvement ou en position fixe,
- une horloge gérée par le microprocesseur,
- un circuit (11) de détection de la présence d'une borne (L) d'un réseau de communication, dit deuxième réseau de communication, et d'émission pour émettre lesdites données réseaux recueillies sur ce réseau selon un protocole de communication, et en ce que
- ledit dispositif est apte à mettre en oeuvre les étapes du procédé de détermination de la position géographique de l'équipement (E) qui sont définies dans les revendications 1 à 4.

6. Dispositif selon la revendication 5, où les bornes (B1-Bn) des premiers réseaux de communication auprès desquelles sont recueillies les données réseaux sont des points d'accès WIFI ou bluetooth.

7. Dispositif selon la revendication 5 ou 6, où ledit deuxième réseau de communication est de type LPWAN (« Low Power Wide Area Network »).

## Patentansprüche

1. Verfahren zur Bestimmung der geographischen Position mindestens einer Ausrüstung (E) mit Hilfe einer Vorrichtung (1), die in Bewegung fest mit der Ausrüstung verbunden ist und einen Bewegungsdetektor aufweist, um zu erfassen, ob die Vorrichtung (1) in Bewegung oder in einer ortsfesten Position ist, wobei das Verfahren aufweist
a) einen ersten Schritt der Bestimmung durch die Vorrichtung (1), wenn diese ortsfest ist und seit einer bestimmten ersten Dauer keiner Verschiebung unterzogen wurde, von Netzdaten, die die Kennungen (B1_Id-Bn_Id) der Anschlüsse von Kommunikationsnetzen, erste Kommunikationsnetze genannt, die in der Umgebung der Vorrichtung (1) angeordnet sind, und die Empfangsleistung (B1_RSSI-Bn_RSSI) der von jedem Anschluss gesendeten Signale enthalten,
b) einen zweiten Schritt des Sendens der Netzdaten durch die Vorrichtung (1) an eine Verarbeitungseinheit (UC) von Daten über ein Kommunikationsnetz, zweites Kommunikationsnetz genannt, wenn das zweite Kommunikationsnetz zur Verfügung steht, und dass
c) der erste Bestimmungsschritt und der zweite Sendeschritt werden erneut nach jeder Verschiebung der Vorrichtung (1) bis zu einer neuen ortsfesten Position und nach einer zweiten bestimmten Dauer, nachdem diese neue ortsfeste Position erreicht wurde, durchgeführt, wobei die zweite Dauer gleich der oder anders als die erste Dauer ist, und dass das Verfahren aufweist:
d) einen Schritt der Bestimmung der geographischen Position der Ausrüstung durch eine Verarbeitungseinheit (UC) ausgehend von den empfangenen Netzdaten.

2. Verfahren nach Anspruch 1, wobei das Verfahren einen Schritt der Speicherung der Netzdaten in einem Speicher der Vorrichtung aufweist, wenn das zweite Kommunikationsnetz nicht zur Verfügung steht.

3. Verfahren nach Anspruch 1 oder 2, wobei das Verfahren aufweist
- einen Schritt der Bestimmung der Netzdaten durch die Vorrichtung, wenn die Vorrichtung während einer bestimmten Dauer ortsfest geblieben ist, die länger ist als die erste Dauer und die zweite Dauer,
- einen Schritt des Sendens der Netzdaten durch die Vorrichtung (1) an die Verarbeitungseinheit (UC) von Daten über das Kommunikationsnetz, drittes Kommunikationsnetz genannt, gleich dem oder unterschiedlich zum zweiten Kommunikationsnetz, wenn dieses zur Verfügung steht.

4. Verfahren nach Anspruch 3, wobei das Verfahren einen Schritt der Speicherung der Netzdaten in einem Speicher der Vorrichtung aufweist, wenn das dritte Kommunikationsnetz nicht zur Verfügung steht.

5. Vorrichtung (1), die verwendet wird, um die Geolokalisierung einer Ausrüstung (E) zu unterstützen, wobei die Vorrichtung aufweist:
- einen Mikrocontroller (13), der mindestens einen Mikroprozessor zur Durchführung der Verarbeitung der Daten und einen Speicher zum Speichern von Daten aufweist,
- eine Schaltung (10) zur Erfassung und zum Empfang der von in ihrer Umgebung angeordneten Anschlüssen (B1-Bn) gesendeten Signale, die eingerichtet ist, um Netzdaten aufzufangen, die die Kennungen (B1_Id-Bn_Id) der Anschlüsse von Kommunikationsnetzen, erste Kommunikationsnetze genannt, die in der Umgebung der Vorrichtung (1) angeordnet sind, und die Empfangsleistung (B1_RSSI-Bn_RSSI) der von jedem Anschluss gesendeten Signale aufweisen,
- einen Bewegungsdetektor (12), der mit einem Eingang des Mikrocontrollers (13) verbunden und eingerichtet ist, um zu erfassen, ob die Vorrichtung (1) in Bewegung oder in ortsfester Position ist,
- einen vom Mikroprozessor verwalteten Taktgeber,
- eine Schaltung (11) zur Erfassung des Vorhandenseins eines Anschlusses (L) eines Kommunikationsnetzes, zweites Kommunikationsnetz genannt, und zum Senden der in diesem Netz aufgefangenen Daten gemäß einem Kommunikationsprotokoll, und dass
- die Vorrichtung fähig ist, die Schritte des Verfahrens zur Bestimmung der geographischen Position der Ausrüstung (E) durchzuführen, die in den Ansprüchen 1 bis 4 definiert sind.

6. Vorrichtung nach Anspruch 5, wobei die Anschlüsse (B1-Bn) der ersten Kommunikationsnetze, bei denen die Netzdaten aufgefangen werden, WIFI- oder Bluetooth-Zugangspunkte sind.

7. Vorrichtung nach Anspruch 5 oder 6, wobei das zweite Kommunikationsnetz von der Art LPWAN ("Low Power Wide Area Network"} ist.

## Claims

1. Method for determining the geographic position of at least one device (E) using an apparatus (1) that moves as one with said device and that includes a movement detector for detecting whether said apparatus (1) is moving or in a stationary position, the method including:
- a) a first step in which the apparatus (1) determines, when the latter is stationary and has not undergone a movement for a first set length of time, network data comprising the identifiers (B1_ld-Bn_ld) of terminals of communication networks called first communication networks, which are located in the environment of the apparatus (1), and the received strength (B1_RSSI-Bn_RSSI) of the signals emitted by each terminal;
- b) a second step in which said apparatus (1) transmits said network data to a data processing unit (UC) via a communication network called the second communication network, if said second communication network is available; and in that
- c) the determining first step and the transmitting second step are re-implemented after each movement of the apparatus (1) to a new stationary position and at the end of a second set length of time after this new stationary position has been reached, said second length of time being identical or different from the first length of time, and in that the method includes:
- d) a step in which a processing unit (UC) determines the geographic position of the device on the basis of the received network data.

2. Method according to Claim 1, the method including a step of storing the network data in a memory of the apparatus if said second communication network is not available.

3. Method according to Claim 1 or 2, the method including:
- a step in which the apparatus determines said network data when the apparatus has remained stationary for a set length of time that is longer than said first length of time and than said second length of time; and
- a step in which said apparatus (1) transmits said network data to the data processing unit (UC) via a communication network called the third communication network if the latter is available, said third communication network being identical to or different from the second communication network.

4. Method according to Claim 3, the method including a step of storing network data in a memory of the apparatus if said third communication network is not available.

5. Apparatus (1) employed to assist in geopositioning a device (E), the apparatus including:
- a microcontroller (13) including at least one microprocessor for processing data and a memory for storing data;
- a circuit (10) for detecting and receiving signals emitted by terminals (B1-Bn) that are located in its environment, said circuit being arranged to retrieve network data including the identifiers (B1_ld-Bn_ld) of terminals of communication networks called first communication networks, which are located in the environment of the apparatus (1), and the received strength (B1_RSSI-Bn_RSSI) of the signals emitted by each terminal;
- a movement detector (12), which is connected to an input of the microcontroller (13) and arranged to detect whether the apparatus (1) is moving or in a stationary position;
- a clock managed by the microprocessor; and
- a circuit (11) for detecting the presence of a terminal (L) of a communication network called the second communication network, and for transmitting said retrieved network data over this network using a communication protocol; and in that
- said apparatus is able to implement the steps of the method for determining the geographic position of the device (E) that are defined in Claims 1 to 4.

6. Apparatus according to Claim 5, wherein the terminals (B1-Bn) of the first communication networks from which the network data are retrieved are Bluetooth or Wi-Fi access points.

7. Apparatus according to Claim 5 or 6, wherein said second communication network is a LPWAN (Low Power Wide Area Network).
